# FASCICULE DE BREVET EUROPEEN

(11) **EP 2 174 860 B1**
(45) Date de publication et mention de la délivrance du brevet: **03.08.2011**
(21) Numéro de dépôt: 09354040.9
(22) Date de dépôt: 12.10.2009
(51) Int. Cl.: B62K 15/00, B62K 13/00, B62K 5/04

(54) **Trottinette pliable**
Klappbarer Roller
Foldable scooter

(30) Priorité: 13.10.2008 FR 0805645
(43) Date de publication de la demande: 14.04.2010
(73) Titulaire: Martin, Michel, 73290 La Motte Servolex (FR)
(72) Inventeur: Martin, Michel, 73290 La Motte Servolex (FR)
(74) Mandataire: Hecké, Gérard

(56) Documents cités:
- EP-A- 1 736 400
- DE-U1- 20 112 214
- FR-A- 2 849 751
- US-A1- 2006 273 534

## Description

### Domaine technique de l'invention

L'invention est relative à un véhicule de transport comprenant un plateau de support horizontal allongé dans la direction de déplacement du véhicule, une colonne de direction montée à rotation par rapport au plateau de support, des roues assurant le roulement du plateau de support sur le sol, dont une roue avant directrice montée à l'extrémité inférieure de la colonne par l'intermédiaire d'une fourche, et un guidon fixé à l'extrémité supérieure de la colonne.

### État de la technique

Dans le panel des moyens de transport mis à la disposition de l'homme, il n'existe pas, à l'heure actuelle, de réponse satisfaisante pour les déplacements courts, par exemple inférieurs à 2 kilomètres, valeur correspondant souvent à la distance entre le domicile et le commerçant le plus proche. La réponse habituelle à ce cas de figure est l'automobile, avec toutes les conséquences néfastes que cela entraîne, à grande échelle. Un problème similaire se pose lorsque des liaisons courtes sont à effectuer pour rejoindre un moyen de transport collectif pour moyenne ou grande distance, comme par exemple le bus, le car, le tramway, le train, le métro (et dans ces derniers cas, pour y accéder par escalier mécanique et ascenseur) ou encore pour rejoindre sa propre automobile si elle est garée à distance.

Le premier problème réside dans le fait de proposer un véhicule de transport motorisé ou transformant l'énergie musculaire avec un bon rendement, non polluant, économe, de taille raisonnable. Le deuxième problème posé impose d'avoir un véhicule facilement transportable, léger et pliant.

Des solutions connues sont constituées par les scooters, mais ceux-ci ne permettent pas l'inter-modalité vis-à-vis des moyens de transport à moyenne ou grande distance.

Les autres solutions connues, à l'image du véhicule décrit dans le document WO2004/052717, se présentent sous forme de trottinette ou de tricycle, éventuellement motorisé, et dans lesquels la colonne de direction est éventuellement rabattable contre le plateau de support. Mais ces véhicules ne présentent pas une robustesse suffisante de manière générale, et en particulier pour offrir une résistance suffisante en cas de choc frontal violent. D'autre part, la protection aérodynamique de l'utilisateur est inexistante, ce qui rend le véhicule généralement inutilisable sous des conditions atmosphériques dégradées. Enfin la largeur du plateau de support n'est pas suffisante de sorte que ces véhicules ne permettent pas de transporter un jeune enfant ou de petits bagages courants tels que paquets de courses, cartables, sacoches, attachés-cases, etc...

Un véhicule ayant les caractéristiques du préambule de la revendication 1 est décrit dans le document EP-A-1736400.

### Objet de l'invention

L'objet de l'invention consiste à réaliser un véhicule de transport qui réponde à l'ensemble de ces problèmes, et qui soit notamment d'une robustesse accrue, qui améliore le confort de l'utilisateur sous des conditions atmosphériques dégradées et qui permette le transport d'un jeune enfant et/ou de petits bagages courants.

Le véhicule selon l'invention est remarquable en ce qu'il comporte :
- une première échancrure centrale ménagée à l'extrémité avant du plateau de support,
- une plaque frontale sur laquelle est montée à rotation libre la colonne de direction selon un axe de rotation sensiblement parallèle au plan de la plaque frontale,
- deux charnières d'articulation de la plaque frontale par rapport au plateau de support, disposées de part et d'autre de la première échancrure centrale, la plaque frontale pouvant basculer entre une position dépliée d'utilisation et une position repliée de rangement ou de transport dans lesquelles l'angle entre la plaque frontale et le plateau de support est respectivement aigu et sensiblement égal à zéro,
- des moyens de verrouillage de la plaque frontale dans la position dépliée d'utilisation,
- une deuxième échancrure centrale ménagée dans la plaque frontale, entre les charnières et en alignement avec la première échancrure,
- un capot de protection solidaire de la plaque frontale, situé au niveau de la deuxième échancrure centrale et recouvrant la roue avant au moins sur le secteur angulaire correspondant à l'angle formé entre la plaque frontale et le plateau de support en position dépliée. Dans le passage de la position dépliée à la position repliée, et inversement, le capot de protection coulisse à l'intérieur de la première échancrure centrale située à l'avant du plateau de support.

Le véhicule de transport selon l'invention présente l'avantage que le plateau de support est suspendu par son extrémité avant à l'extrémité inférieure de la plaque frontale qui elle-même est suspendue à la colonne de direction en appui sur le sol par son extrémité inférieure munie de la roue directrice. Cette structure nouvelle par rapport à l'art antérieur où l'extrémité avant du plateau était suspendue directement à la colonne de direction présente une robustesse générale nettement améliorée, et en particulier en cas de choc frontal par une reprise d'efforts par les charnières. D'autre part, la présence de la plaque frontale et du capot de protection constitue une protection aérodynamique efficace pour l'utilisateur, et pour ses éventuels bagages ou co-passager.

Selon un mode de réalisation préférentiel, les moyens de verrouillage comportent des moyens équipant le capot de protection pour former une butée angulaire à la plaque frontale en cas d'application sur celle-ci, en position dépliée, d'un moment d'ouverture autour des charnières d'articulation dans un sens opposé à celui correspondant au passage vers la position repliée. Contrairement à l'art antérieur où les moments d'ouverture en cas de choc frontal étaient équilibrés uniquement par la liaison entre la colonne de direction et le plateau de support, la structure selon l'invention permet une transmission des efforts de la colonne de direction vers la plaque frontale, puis de celle-ci vers le capot de protection, puis de celui-ci vers le plateau de support, de sorte qu'une grande partie des moments d'ouverture en cas de choc frontal est équilibrée par les moyens formant butée angulaire, déchargeant d'autant la fixation de la colonne de direction.

Dans une variante avantageuse, la colonne de direction est montée à rotation libre sur le capot de protection, ce qui permet d'améliorer encore la dissipation des efforts.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue en perspective d'un exemple de véhicule de transport selon l'invention,
- les figures 2 et 3 sont des vues en coupe de ce même exemple, la figure 2 selon un plan vertical longitudinal central, la figure 3 selon un plan vertical transversal en direction de l'avant,
- la figure 4 est une vue de dessous du même exemple, après enlèvement de la tôle de blindage,
- la figure 5 est une vue de dessus du même exemple de véhicule de transport selon l'invention,
- la figure 6 est une vue en perspective du capot de protection utilisé dans le véhicule des figures précédentes,
- la figure 7 est une vue de côté du véhicule en position dépliée d'utilisation,
- la figure 8 est une vue de côté du véhicule en position repliée de transport,
- la figure 9 est une vue de côté du véhicule en position repliée de rangement.

### Description d'un mode préférentiel de l'invention

Les figures illustrent un véhicule de transport 10 selon l'invention. Celui-ci comprend un plateau de support 11 horizontal de grande largeur, allongé dans la direction de déplacement du véhicule 10, et une colonne de direction 12 montée à rotation par rapport au plateau de support 11. Des roues assurent le roulement du plateau de support 11 sur le sol, dont une roue avant directrice 13 montée à l'extrémité inférieure de la colonne 12 par l'intermédiaire d'une fourche 14. Un guidon 15 est fixé à l'extrémité supérieure de la colonne 12.

Le véhicule 10 comporte de plus une plaque frontale 16 sur laquelle est montée à rotation libre la colonne de direction 12 selon un axe de rotation sensiblement parallèle au plan de la plaque frontale 16.

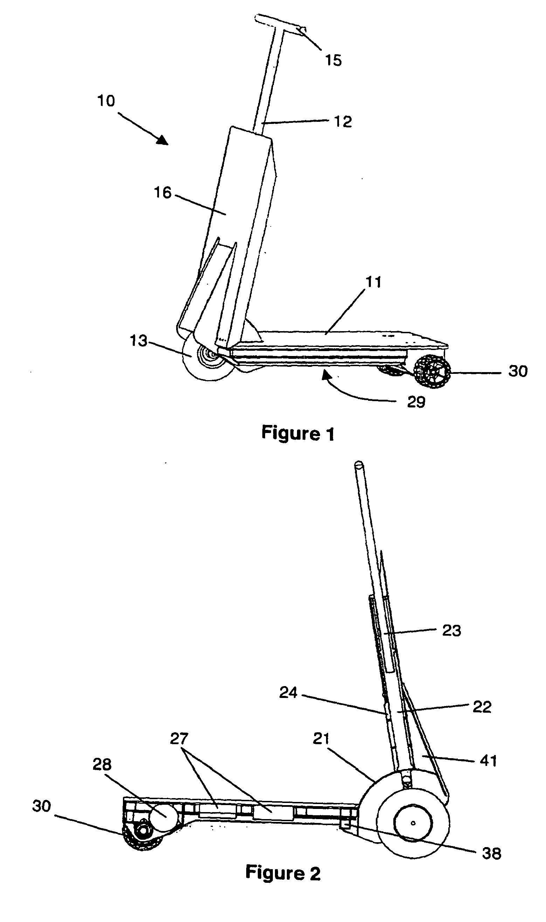

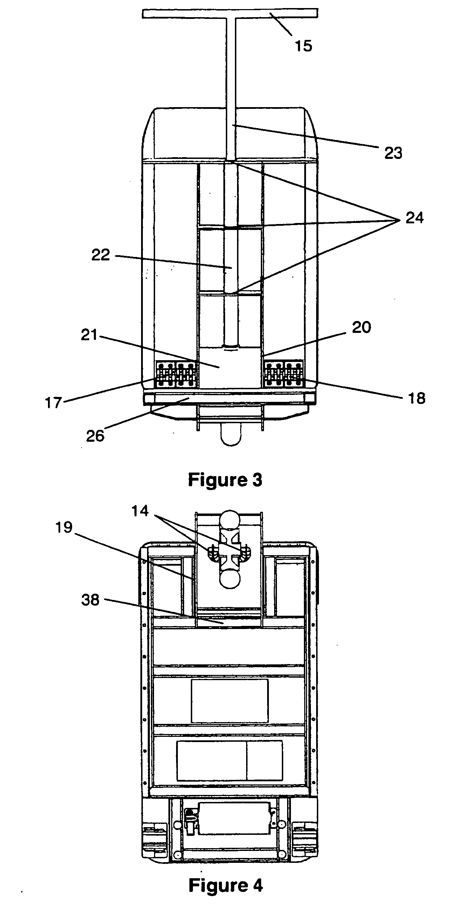

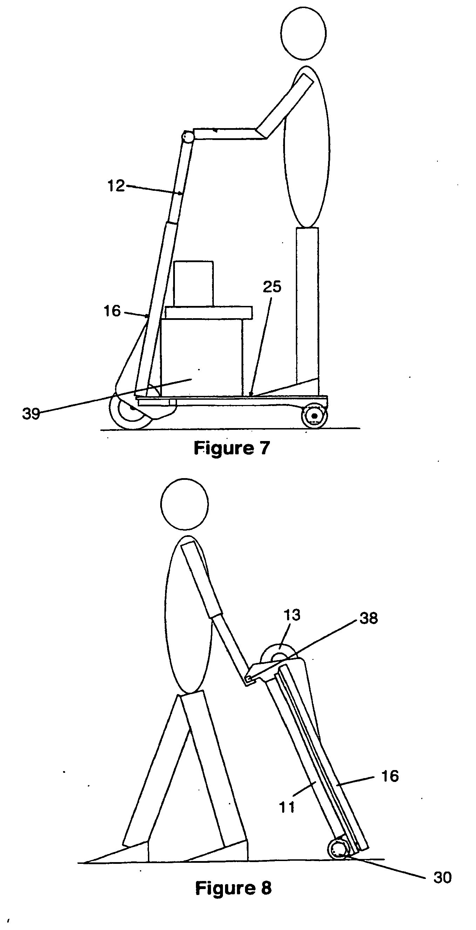

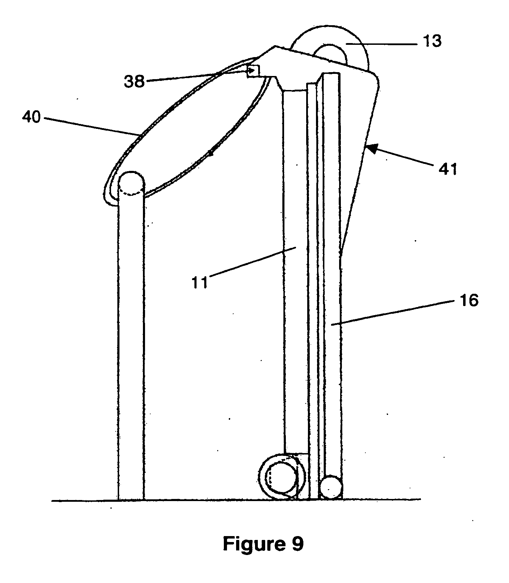

Deux charnières d'articulation 17, 18 de la plaque frontale 16 par rapport au plateau de support sont disposées latéralement de part et d'autre d'une première échancrure centrale 19 ménagée à l'extrémité avant du plateau de support 11. Les axes des deux charnières 17, 18 sont alignés dans une direction latérale horizontale perpendiculaire à la direction longitudinale de déplacement du véhicule 10. De cette manière, la plaque frontale 16 peut pivoter entre une position dépliée d'utilisation (figures 1 à 5 et 7) et une position repliée de transport (figure 8) ou de rangement (figure 9) dans lesquelles l'angle entre la plaque frontale 16 et le plateau de support 11 est respectivement aigu (de l'ordre de 80 degrés) et sensiblement égal à zéro.

Des moyens de verrouillage décrits plus loin assurent le blocage de la plaque frontale 16 dans la position dépliée d'utilisation. Ces moyens de verrouillage remplissent donc une première fonction pour former une butée angulaire à la plaque frontale 16 en cas d'application sur celle-ci, en position dépliée, d'un moment de fermeture autour des charnières d'articulation 17, 18 dans un sens correspondant au passage vers la position repliée. Ces moyens de verrouillage remplissent également une deuxième fonction pour former une butée angulaire à la plaque frontale 16 en cas d'application sur celle-ci, en position dépliée, d'un moment d'ouverture autour des charnières d'articulation 17, 18 dans un sens opposé à celui correspondant au passage vers la position repliée.

Une deuxième échancrure centrale 20 est ménagée dans l'extrémité inférieure de la plaque frontale 16, entre les charnières 17, 18 et longitudinalement en alignement avec la première échancrure 19 du plateau de support 11, c'est-à-dire sans décalage latéral. Ainsi, les deux échancrures 19, 20 délimitent entre elles à l'avant du véhicule 10 un volume libre d'accueil d'un capot de protection 21 recouvrant la roue avant 13 sur le secteur angulaire formé, en position dépliée, entre le plateau de support 11 et la plaque frontale 16. Plus précisément, le capot de protection 21 est fixé sur la plaque frontale 16 pour se loger dans les première et deuxième échancrures centrales 19, 20 en recouvrant la roue avant 13 au moins sur le secteur angulaire correspondant à l'angle formé entre la plaque frontale 16 et le plateau de support 11 en position dépliée. La première échancrure 19 présente des dimensions très légèrement supérieures aux dimensions extérieures du capot 21 pour laisser le passage nécessaire à ce capot pendant le passage d'une position à l'autre, tout en conservant la propriété d'étanchéité.

La colonne de direction 12 se décompose en une potence 22 dans sa partie inférieure et en un tube télescopique 23 dans sa partie supérieure. La potence 22 est bloquée en translation dans la direction de pivotement de la colonne 12, contrairement au tube télescopique 23. L'extrémité inférieure de la potence est munie de la fourche 14 qui encadre la roue avant 13. L'extrémité supérieure du tube télescopique 23 porte perpendiculairement le guidon 15. La plaque frontale 16 contient dans son épaisseur un fourreau 24 à l'intérieur duquel pivote la potence 22 qui oriente la roue avant directrice 13. Le fourreau 24 peut être avantageusement remplacé par un alignement de trous circulaires dans des traverses de rigidification de la plaque frontale. Ainsi la liaison au sol de la plaque frontale 16 est un système comprenant en série la roue, la potence 22 et le fourreau 24.

La roue avant directrice 13 tourne et pivote à l'intérieur du capot 21 dont la largeur est suffisamment grande, compte tenu du diamètre de la roue, pour permettre des angles de pivotement compatibles avec le guidage d'un appareil de transport de ce type (par exemple une trentaine de degrés). Par conséquent, ni la plaque frontale 16, ni le capot 21, ne pivotent avec la roue avant directrice 13.

Le plateau de support 11 du passager (et de ses éventuels bagages ou co-passager) contient dans son épaisseur la plaque d'appui 25 proprement dite et, sous celle-ci, un châssis de soutien 26. Dans le cas particulier non limitatif où le véhicule 10 est motorisé et où au moins l'une des roues est motorisée, des batteries de stockage d'énergie 27 ou un réservoir de carburant non représenté peuvent être aménagés dans l'épaisseur du châssis 26, en complément d'un chargeur de batteries et d'une prise électrique pour le rechargement des batteries, ou le système d'alimentation du réservoir. Dans le cas d'une motorisation électrique, le boîtier contenant le système de commande et de contrôle du moteur électrique 28 (carte électronique et ses périphériques) ainsi que toute la câblerie associée sont également logés à l'intérieur du châssis 26. Une tôle de blindage 29 assure la protection, par le dessous du véhicule, des différents composants précités.

Le plateau de support 11 est préférentiellement plat, c'est-à-dire non relevé à son extrémité arrière, de façon à éliminer toute gêne au niveau des pieds du passager (voir figure 7).

Dans sa partie arrière, le plateau de support 11 repose sur le sol par l'intermédiaire d'au moins une roue arrière 30, éventuellement motrice, au nombre de deux dans l'exemple illustré. Mais comme deux roues motrices posent un difficile problème de différentiel, il est envisageable de prévoir une seule roue arrière motrice 30 centrale (éventuellement dédoublée). Dans ce dernier cas, celle-ci est préférentiellement accompagnée de deux roulettes latérales auxiliaires non motrices (non représentées). Elles sont alors situées aux deux angles arrière du plateau de support, présentent de préférence un diamètre inférieur à la roue motrice et sont destinées en position dépliée à améliorer la stabilité du véhicule 10 et en position repliée à la traction manuelle de ce véhicule par le passager (voir la figure 8). La ou les roue(s) arrière est (sont) disposée(s) sous le plateau de support 11 à des emplacements permettant à ces dernières de ne pas dépasser à l'arrière, ni, de préférence, sur les côtés.

En cas de présence d'un moteur électrique 28, celui-ci est disposé sous la plaque d'appui 25, sans en dépasser à l'arrière, ni, de préférence, sur les côtés. Il est possible de le placer directement sur l'arbre liant les roues arrière 30, si sa vitesse de rotation, son couple et son diamètre (par rapport à celui des roues 30) le permettent. Il peut aussi être déporté, soit parallèlement à l'axe de rotation de la (des) roue(s) 30 avec un entraînement par courroie(s), soit perpendiculairement à l'axe de rotation de la (des) roue(s) 30 avec un entraînement par pignon.

En position repliée, la plaque frontale 16 vient en appui contre la plaque d'appui 25 du plateau de support 11 de manière à former un angle entre eux sensiblement égal à zéro et à présenter un aspect monobloc. Seule la roue avant 13 est en saillie de ce bloc à l'extrémité avant et au-dessus du capot 21, ainsi que la (les) roue(s) arrière 30 à l'extrémité arrière et en dessous du plateau 11. L'ensemble formé par ce bloc et les roues avant et arrière saillantes, reposant sur le sol par l'intermédiaire des roues arrières (figure 8) ou des roulettes latérales auxiliaires en cas de roulette arrière motrice centrale, constitue un chariot tractable manuellement et d'un encombrement très réduit.

Dans sa position repliée, le véhicule 10 peut également être stocké de manière verticale en appui sur l'extrémité arrière du plateau 11, de façon à minimiser son encombrement au sol (figure 9). Cette caractéristique est importante dans le cadre de son inter-modalité avec les transports en commun.

De préférence, les charnières d'articulation 17, 18 sont de type « charnières à piano», d'assez gros diamètre et de faible longueur, cette appellation « charnière à piano» indiquant que chacune d'elle comporte au moins trois pattes, de préférence selon un nombre impair.

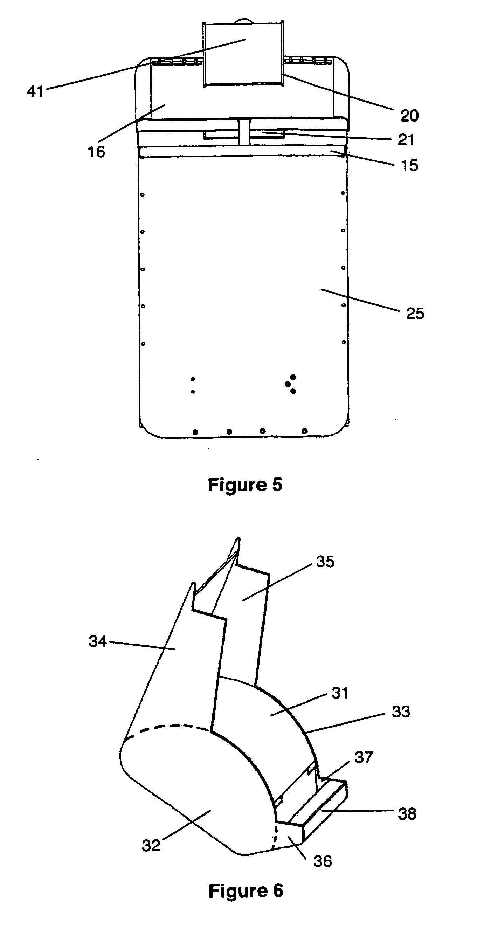

En référence à la figure 6, le capot de protection 21 se compose d'une enveloppe de recouvrement 31 dont la forme est une surface cylindrique qui couvre un secteur angulaire dont l'angle est supérieur à l'angle formé par la plaque frontale 16 par rapport au plateau de support 11 en position dépliée. La forme cylindrique a une section qui suit d'aussi près que possible le contour de la roue avant 13. La valeur du secteur angulaire couvert par l'enveloppe de recouvrement 31 est avantageusement d'environ 180°. La fixation du capot de protection 21 est choisie de manière que l'axe de la surface cylindrique de l'enveloppe 31 soit parallèle à l'axe des charnières d'articulation 17, 18 et passe à proximité du centre de la roue avant 13. Selon la garde au sol du plateau de support, l'axe des deux charnières 17, 18 est plus ou moins décalé en hauteur, préférentiellement vers le haut, par rapport à l'axe, de manière que le fourreau 24 soit en contact avec le dessus de la plaque d'appui 25 en position repliée. Selon le positionnement de la plaque frontale 16 par rapport à la roue avant directrice 13, l'axe des deux charnières 17, 18 est également décalé, préférentiellement vers l'arrière, dans la direction longitudinale de déplacement de manière que la suspension de l'extrémité avant du plateau de support 11 sur l'extrémité inférieure de la plaque frontale 16 présente une géométrie minimisant les moments parasites. Les extrémités de l'enveloppe de recouvrement 31 considérées dans la direction de sa génératrice sont raccordées à des joues latérales 32, 33.

Pour une protection optimale contre les éclaboussures, le capot de protection 21 occupe la totalité de l'échancrure centrale 20 rectangulaire de la plaque frontale 16 dont il est solidaire, et en position dépliée, il remplit également la totalité de l'échancrure centrale 19 rectangulaire du plateau de support. Par contre, le capot de protection ne remplit que partiellement l'échancrure 19 du plateau 11 en position repliée, en raison du décalage entre l'axe des charnières d'articulation 17, 18 et l'axe de l'enveloppe 31 du capot 21 passant à proximité du centre de la roue avant 13.

En raison de la présence de la fourche 14 qui exige un passage de quelques centimètres, la section de l'enveloppe 31 n'est qu'approximativement circulaire : un renflement ponctuel ou transversal sur toute la largeur du capot 21 est agencé au droit de la potence 22. Pour contourner la difficulté de réalisation de ce renflement, il est possible d'agrandir le rayon de l'enveloppe 31 pour éloigner radialement le capot 21 par rapport à la périphérie de la roue avant 13. Il est possible aussi de réaliser une enveloppe 31 selon deux arcs de cercle se raccordant au droit de la base de la potence 22.

En position dépliée, pour renforcer la transmission des efforts générés par les moments d'ouverture autour des charnières d'articulation 17, 18 dans un sens opposé à celui correspondant au passage vers la position repliée, le capot 21 est surmonté de deux nervures 34 et 35 de préférence positionnées au droit de ses deux joues latérales 32, 33. Au moins une portion de ces nervures vient en appui devant la plaque frontale 16 pour faire une butée angulaire à cette dernière dans son mouvement d'ouverture, permettant la transmission des efforts au capot 21 et de celui-ci au-dessous du châssis 26 qui fait le blocage angulaire final.

Sous le plateau de support en position dépliée, les deux joues latérales 32, 33 du capot 21 sont prolongées à l'arrière du capot 21 par deux pattes 36, 37 qui ont pour fonction de supporter, à leur extrémité libre, une traverse 38 qui les relie. En position dépliée, la traverse 38 s'appuie contre le dessous du châssis de soutien 26 dans le mouvement cinématiquement admissible de rotation de la plaque frontale 16 par rapport au plateau de support 11, contribuant ainsi à former une butée angulaire contre les moments d'ouverture. En position repliée, la traverse 38 peut constituer une poignée centrale pour la traction du véhicule 10, ou un moyen d'accrochage d'un câble antivol 40 améliorant la stabilité du véhicule dans sa position verticale de rangement en le fixant au véhicule de transport en commun (figure 9).

Le verrouillage de la plaque frontale 16 en position dépliée est complété par un système de serrure classique, à un ou plusieurs pênes. Cette serrure est solidaire du plateau 11, située à l'arrière du capot 21 et de préférence fixée sous la plaque 25. Les gâches dans lesquelles s'introduisent les deux pênes sont de préférence rectangulaires. Elles sont réalisées dans l'enveloppe 31 du capot 21. Dans le cas où il n'y aurait qu'une gâche, celle-ci serait disposée à un emplacement central, en veillant à ce que l'extrémité du pêne n'entre pas en contact avec la roue avant 13. Au droit des (de la) gâche(s), le capot 21 peut comporter un second renflement pour assurer une parfaite perpendicularité de la course des (du) pêne(s) avec le capot 21. Les pênes sont de préférence des pênes demi-tour avec un mouvement de translation s'opposant à un ressort de rappel, leur pan coupé ou arrondi étant tourné vers le bas. Toutefois, d'autres moyens de verrouillage sont envisageables, comme par exemple des verrous avec rotation horizontale.

Le passage de la position dépliée à la position repliée se fait en quelques secondes selon la séquence suivante :
- abaissement du guidon 15 par coulissement du tube télescopique 23 dans sa position la plus basse,
- blocage de l'arrière du véhicule avec le pied et traction sur le guidon 15 avec une première main pour faire basculer le véhicule et amener le capot 21 à hauteur de main sans avoir besoin de se baisser,
- déblocage du verrouillage avec la seconde main ; pour faciliter cette opération, on peut être amené à exercer sur le guidon 15, avec la première main, une légère poussée vers le haut dans le sens d'une ouverture plus grande de la plaque frontale 16 par rapport au plateau 11,
- manoeuvre avec la seconde main de la poignée ou du levier commandant la serrure (en cas de verrouillage mécanique) ou bien maintien enfoncé du bouton qui est en haut de la plaque frontale (en cas de verrouillage électrique), et abaissement de cette plaque frontale avec la première main,
- verrouillage éventuel de la plaque frontale 16 en position repliée, celui-ci étant surtout utile si la distance où le véhicule 10 doit être tracté est grande ; si la distance est faible et/ou si le véhicule 10 doit être rangé en position verticale, ce verrouillage n'est pas indispensable ; au contraire, l'absence de verrouillage autorise un léger angle entre la plaque frontale 16 et le plateau 11, augmentant la stabilité du véhicule 10 en position verticale.

Le passage de la position repliée à la position dépliée se fait en quelques secondes en suivant la séquence précédente dans l'ordre inverse.

Dans le cas d'un rangement, le passage en position repliée est avantageusement complété par un recouvrement éventuel de la roue avant 13 au moyen d'un capuchon de propreté qui est rangé dans un logement 41 situé entre les deux nervures 34, 35 du capot 21 et au-dessus de celui-ci en position dépliée. Ce logement est fermé vers l'extérieur par une plaque qui est fixée et/ou soudée aux deux nervures et dont la partie la plus proche du capot constitue une trappe amovible autour d'une simple charnière horizontale « à piano » et blocable par un aimant. D'un côté, le capuchon est fixé à l'intérieur du logement et de l'autre, il est muni d'un système d'attache quelconque (bande adhésive, oeillet, bouton à pression, etc...) pour fixation à l'arrière du capot 21, de l'autre côté de la roue avant 13 qui est, dans ce mouvement, parfaitement recouverte. L'existence de ce capuchon est importante dans le cadre de l'inter-modalité du véhicule 10 avec les transports en commun car elle permet d'éviter des salissures de la part de la roue avant 13 qui est en saillie vers le haut en position de rangement.

Il ressort de ce qui précède que les moyens de verrouillage sont constitués par le système de serrure et par les pattes arrière 36, 37 et par la traverse 38. Les moyens pour former une butée angulaire à la plaque frontale 16 en cas d'application sur celle-ci, en position dépliée, d'un moment de fermeture autour des charnières d'articulation 17, 18 dans un sens correspondant au passage vers la position repliée, sont constitués par le système de serrure. Les moyens pour former une butée angulaire à la plaque frontale 16 en cas d'application sur celle-ci, en position dépliée, d'un moment d'ouverture autour des charnières d'articulation 17, 18 dans un sens opposé à celui correspondant au passage vers la position repliée, sont constitués par l'appui de la plaque frontale 16 contre les nervures 34, 35, et par le contact des pattes 36, 37 et de la traverse 38 contre le dessous du plateau de support 11, et éventuellement par le système de serrure en fonction de la forme du (des) pêne(s).

En position dépliée et pendant l'utilisation, des bagages 39 voire un deuxième passager, notamment un enfant, peuvent être embarqués dans l'espace entre l'utilisateur et la plaque frontale 16.

Le véhicule qui vient d'être décrit constitue un hybride entre un scooter et une trottinette classique. Sa largeur permet au passager d'être parfaitement stable sur ses deux pieds légèrement écartés, sans que ceux-ci dépassent latéralement du véhicule. La plaque frontale et le capot de protection constituent à l'avant un carénage intégral qui protège totalement du vent et des projections générées par la roue avant les pieds et les jambes du passager, de son éventuel co-passager et ses éventuels bagages. La posture préférentiellement debout du passager (le véhicule pouvant cependant s'adapter à une position assise), et la possibilité qu'il a, en prenant appui sur le sol, d'impulser au véhicule un mouvement d'avancement avec un rendement efficace reprennent les avantages d'une trottinette classique.

La plaque frontale 16 peut offrir une surface propice à l'implantation, sur son périmètre, d'une bande fluorescente de sécurité dont le tracé est spécifique du véhicule et, à l'intérieur de ce périmètre, d'autocollants pour sa personnalisation et de cellules photovoltaïques pour l'alimentation de fonctions électriques secondaires telles que le verrouillage électrique, l'avertissement sonore, l'éclairage, l'affichage des commandes. Elle peut également offrir, de part et d'autre de la colonne de direction 12, un volume propice à l'implantation de divers équipements pratiques tels que boîte à gants, systèmes de fixation des bagages transportés, système de verrouillage de la plaque frontale 16 sur le plateau de support 11 en position repliée.

Le châssis 26 du plateau de support 11 peut contenir des alvéoles susceptibles d'accueillir des composants de nature électrique et électronique tels que batteries, chargeur de ces batteries, prises électriques, ventilateurs, boîtiers électroniques, dont la fonction est d'assurer une motorisation totalement non polluante.

## Revendications

1. Véhicule de transport (10) comprenant un plateau de support (11) horizontal allongé dans la direction de déplacement du véhicule (10), une colonne de direction (12) montée à rotation par rapport au plateau de support (11), des roues (13, 30) assurant le roulement du plateau de support (11) sur le sol, dont une roue avant (13) directrice montée à l'extrémité inférieure de la colonne (12) par l'intermédiaire d'une fourche (14), et un guidon (15) fixé à l'extrémité supérieure de la colonne (12), une première échancrure centrale (19) ménagée à l'extrémité avant du plateau de support (11), véhicule **caractérisé en ce qu'**il comporte :
- une plaque frontale (16) sur laquelle est montée à rotation libre la colonne de direction (12) selon un axe de rotation sensiblement parallèle au plan de la plaque frontale (16),
- deux charnières d'articulation (17, 18) de la plaque frontale (16) par rapport au plateau de support (11), disposées de part et d'autre de la première échancrure centrale (19), la plaque frontale (16) pouvant pivoter entre une position dépliée d'utilisation et une position repliée de rangement ou de transport dans lesquelles l'angle entre la plaque frontale (16) et le plateau de support (11) est respectivement aigu et sensiblement égal à zéro,
- des moyens de verrouillage de la plaque frontale (16) dans la position dépliée d'utilisation,
- une deuxième échancrure centrale (20) ménagée dans la plaque frontale (16), entre les charnières (17, 18) et en alignement avec la première échancrure (19),
- un capot de protection (21) solidaire de la plaque frontale (16) pour se loger dans les première et deuxième échancrures centrales (19, 20) en recouvrant la roue avant (13) au moins sur le secteur angulaire correspondant à l'angle formé entre la plaque frontale (16) et le plateau de support (11) en position dépliée.

2. Véhicule selon la revendication 1, **caractérisé en ce que** les moyens de verrouillage comportent des moyens (34 à 38) équipant le capot de protection (21) pour former une butée angulaire à la plaque frontale (16) en cas d'application sur celle-ci, en position dépliée, d'un moment d'ouverture autour des charnières d'articulation (17, 18) dans un sens opposé à celui correspondant au passage vers la position repliée.

3. Véhicule selon la revendication 2, **caractérisé en ce que** les moyens (34 à 38) formant butée angulaire comportent, sous le plateau de support en position dépliée d'utilisation, à l'arrière du capot (21) et solidaire de celui-ci, une traverse (38) constituant une poignée de traction en position repliée de transport et un moyen d'accrochage d'un câble antivol (40) en position repliée de rangement.

4. Véhicule selon l'une des revendications 1 à 3 **caractérisé en ce que** le capot de protection est surmonté, devant la plaque frontale, d'un logement (41) dans lequel est abrité un moyen de protection lié à ce logement et venant couvrir la roue avant en position repliée de rangement.

5. Véhicule selon l'une des revendications 1 à 4 **caractérisé en ce que** la plaque frontale offre une surface propice à l'implantation, sur son périmètre, d'une bande fluorescente de sécurité dont le tracé est spécifique du véhicule et, à l'intérieur de ce périmètre, d'autocollants pour sa personnalisation et de cellules photovoltaïques pour l'alimentation de fonctions électriques secondaires telles que le verrouillage électrique, l'avertissement sonore, l'éclairage, l'affichage des commandes.

6. Véhicule selon l'une des revendications 1 à 5 **caractérisé en ce que** la plaque frontale (16) offre, de part et d'autre de la colonne de direction (12), un volume propice à l'implantation de divers équipements pratiques tels que boîte à gants, systèmes de fixation des bagages transportés, système de verrouillage de la plaque frontale (16) sur le plateau de support (11) en position repliée.

7. Véhicule selon l'une des revendications 1 à 6, **caractérisé en ce qu'**au moins l'une des roues (13, 30) est motorisée.

8. Véhicule selon l'une des revendications 1 à 7, **caractérisé en ce que** le châssis (26) du plateau de support (11) contient des alvéoles susceptibles d'accueillir des composants de nature électrique et électronique tels que batteries, chargeur de ces batteries, prises électriques, ventilateurs, boîtiers électroniques, dont la fonction est d'assurer une motorisation totalement non polluante.

9. Véhicule selon l'une des revendications 1 à 8, **caractérisé en ce que** la colonne de direction (12) est montée à rotation libre sur le capot de protection (21).

## Claims

1. A transport vehicle (10) comprising a horizontal support platform (11) elongate in the direction of movement of the vehicle (10), a steering column (12) mounted rotating with respect to the support platform (11), wheels (13, 30) enabling the support platform (11) to roll on the ground, a front drive wheel (13) of which fitted at the bottom end of the column (12) by means of a fork (14), and a handlebar (15) fixed to the top end of the column (12), a first central notch (19) arranged at the front end of the support platform (11), a vehicle **characterized in that** it comprises:
- a front plate (16) on which the steering column (12) is mounted with free rotation around an axis of rotation substantially parallel to the plane of the front plate (16),
- two articulation hinges (17, 18) of the front plate (16) with respect to the support platform (11), arranged on each side of the first central notch (19), the front plate (16) being able to swivel between an unfolded use position and a folded-in stowing or transport position in which the angle between the front plate (16) and the support platform (11) is respectively acute and substantially equal to zero,
- means for locking the front plate (16) in the unfolded use position,
- a second central notch (20) arranged in the front plate (16) between the hinges (17, 18) and in alignment with the first notch (19),
- a protective cover (21) secured to the front plate (16) to be housed in the first and second central notches (19, 20) and covering the front wheel (13) at least over an angular sector corresponding to the angle formed between the front plate (16) and the support platform (11) in the unfolded position.

2. The vehicle according to claim 1, **characterized in that** the means for locking comprise means (34 to 38) equipping the protective cover (21) to form a stop angular to the front plate (16) in case of application on the latter, in the unfolded position, of an opening moment around the articulation hinges (17, 18) in an opposite direction to that corresponding to movement to the folded-in position.

3. The vehicle according to claim 2, **characterized in that** the means (34 to 38) forming an angular stop comprise, under the support platform in the unfolded use position, at the rear of the cover (21) and secured to the latter, a cross-member (38) constituting a traction handle in the folded-in transport position and a means for securing an antitheft cable (40) in the folded-in stowing position.

4. The vehicle according to one of claims 1 to 3, **characterized in that**, in front of the front plate, there is arranged a housing (41), above the protective cover, in which there are housed protection means linked to this housing and covering the front wheel in the folded-in stowing position.

5. The vehicle according to one of claims 1 to 4, **characterized in that** the front plate provides a surface suitable for accommodating on its perimeter a fluorescent safety strip the tracing of which is specific to the vehicle and, inside this perimeter, stickers for customization of the vehicle and photovoltaic cells for supply of secondary electric functions such as electric locking, audible warning, lighting, and command display.

6. The vehicle according to one of claims 1 to 5, **characterized in that**, on each side of the steering column (12), the front plate (16) offers a volume suitable for accommodating various practical items of equipment such as glove box, systems for securing transported luggage, and locking system of the front plate (16) on the support platform (11) in the folded-in position.

7. The vehicle according to one of claims 1 to 6, **characterized in that** at least one of the wheels (13, 30) is motor-driven.

8. The vehicle according to one of claims 1 to 7, **characterized in that** the chassis (26) of the support platform (11) contains recesses designed to accommodate components of electric and electronic nature such as batteries, chargers of these batteries, electric sockets, fans, and electronic package enclosures, the function of which is to ensure totally non-polluting motorization.

9. The vehicle according to one of claims 1 to 8, **characterized in that** the steering column (12) is mounted with free rotation on the protective cover (21).

## Patentansprüche

1. Transportroller (10), der ein horizontales Trittbrett (11), das sich in Fahrtrichtung des Rollers (10) erstreckt, eine Lenksäule (12), die drehbar bezüglich dem Trittbrett (11) angeordnet ist, Räder (13, 30), die das Rollen des Trittbretts (11) am Boden ermöglichen, und zwar ein lenkendes Vorderrad (13), das am unteren Ende der Säule (12) mittels einer Gabel (14) montiert ist, sowie eine Lenkstange (15) umfasst, die am oberen Ende der Säule (12) angebracht ist, wobei eine erste mittlere Aussparung (19) am vorderen Ende des Trittbretts (11) vorgesehen ist, Roller, der **dadurch gekennzeichnet ist, dass** er umfasst :
- eine vordere Platte (16), an die die Lenksäule (12) frei drehbar gemäß einer Drehachse montiert ist, die im Wesentlichen parallel zur Ebene der vorderen Platte (16) ist,
- zwei Drehgelenke (17, 18) der vorderen Platte (16) bezüglich dem Trittbrett (11), die beidseits der ersten mittleren Aussparung (19) angeordnet sind, wobei das vordere Brett (16) zwischen einer ausgeklappten Benutzungsposition und einer zusammengeklappten Aufbewahrungs- bzw. Transportposition geschwenkt werden kann, in der der Winkel zwischen der vorderen Platte (16) und dem Trittbrett (11) jeweils spitz bzw. im Wesentlichen gleich Null ist,
- Mittel zum Verriegeln der vorderen Platte (16) in der ausgeklappten Benutzungsposition,
- eine zweite mittlere Aussparung (20), die in der vorderen Platte (16) zwischen den Gelenken (17, 18) und koaxial zur ersten Aussparung (19) vorgesehen ist,
- eine Schutzabdeckung (21), die fest verbunden ist mit der vorderen Platte (16) und sich in die erste und zweite mittlere Aussparung (19, 20) einfügt und dabei das Vorderrad (13) zumindest auf dem Winkelabschnitt schützt, der dem von der vorderen Platte (16) und dem Trittbrett (11) in ausgeklappter Position gebildeten Winkel entspricht.

2. Roller nach Anspruch 1, **dadurch gekennzeichnet, dass** die Mittel zum Verriegeln Mittel (34-38) umfassen, die die Schutzabdeckung (21) ausstatten, um einen Winkelanschlag zur vorderen Platte (16) bei einem Anschlagen an diese in ausgeklappter Position mit einem Öffnungsmoment um die Drehgelenke (17, 18) in einer entgegengesetzten Richtung zu derjenigen zu bilden, die dem Übergang zur zusammengeklappten Position entspricht.

3. Roller nach Anspruch 2, **dadurch gekennzeichnet, dass** die Mittel (34-38), die einen Winkelanschlag bilden, in ausgeklappter Benutzungsposition unter dem Trittbrett hinter der Abdeckung (21) und mit dieser fest verbunden einen Querträger (38) umfassen, der in zusammengeklappter Transportposition einen Traggriff und in zusammengeklappter Aufbewahrungsposition eine Vorrichtung zum Befestigen eines Diebstahlsicherungsseils (40) bildet.

4. Roller nach einem der Ansprüche 1 bis 3, **dadurch gekennzeichnet, dass** über der Schutzabdeckung vor der vorderen Platte eine Aufnahme (41) vorgesehen ist, in der sich eine Schutzvorrichtung befindet, die mit dieser Aufnahme verbunden ist und das Vorderrad in zusammengeklappter Aufbewahrungsposition bedeckt.

5. Roller nach einem der Ansprüche 1 bis 4, **dadurch gekennzeichnet, dass** die vordere Platte eine Fläche hat, die geeignet ist für die Anbringung eines fluoreszierenden Sicherheitsbands an ihrem Umfang, dessen Verlauf spezifisch für den Roller ist, und innerhalb dieses Umfangs von Aufklebern mit Adressangaben und Fotovoltaikzellen zur Unterstützung elektrischer Sekundärfunktionen wie elektrische Verriegelung, Hupe, Beleuchtung, Anzeige von Befehlen.

6. Roller nach einem der Ansprüche 1 bis 5, **dadurch gekennzeichnet, dass** die vordere Platte (16) beidseits der Lenksäule (12) einen Raum umfasst, der geeignet ist für die Anbringung diverser Ausrüstungen wie einem Handschuhfach, Befestigungssystemen für mitgenommenes Gepäck, ein Verriegelungssystem für die vordere Platte (16) am Trittbrett (11) in zusammengeklappter Position.

7. Roller nach einem der Ansprüche 1 bis 6, **dadurch gekennzeichnet, dass** mindestens eines der Räder (13, 30) motorisch angetrieben ist.

8. Roller nach einem der Ansprüche 1 bis 7, **dadurch gekennzeichnet, dass** der Rahmen (26) des Trittbretts (11) Hohlräume enthält, die geeignet sind, elektrische und elektronische Bauteile wie Batterien, Batterieladegerät, Elektroanschlüsse, Ventilatoren, elektronische Geräte aufzunehmen, deren Aufgabe es ist, eine vollständig umweltfreundliche Motorisierung zu gewährleisten.

9. Roller nach einem der Ansprüche 1 bis 8, **dadurch gekennzeichnet, dass** die Lenksäule (12) frei drehbar an die Schutzabdeckung (21) montiert ist.
